# EUROPEAN PATENT APPLICATION

(11) **EP 4 443 849 A1**
(43) Date of publication of application: **09.10.2024**
(21) Application number: 23851330.3
(22) Date of filing: 30.05.2023
(51) Int. Cl.: H04L 65/1069

(54) **DATA TRANSMISSION METHOD AND APPARATUS, DEVICE, STORAGE MEDIUM, AND COMPUTER PROGRAM PRODUCT**

(30) Priority: 09.08.2022 CN 202210958709
(71) Applicant: Tencent Technology (Shenzhen) Company Limited, Shenzhen, Guangdong 518057 (CN)
(72) Inventor: FEI, Wei, Shenzhen, Guangdong 518057 (CN)
(74) Representative: EP&C
(86) International application number: PCT/CN2023/097116
(87) International publication number: WO 2024/032102

(57) **Abstract**

A data transmission method, comprising: generating a session invitation of a communication session, and sending the session invitation to a destination end on the basis of a connectionless-oriented transport layer protocol and a connection-oriented transport layer protocol, respectively (602); according to the transmission state of a session response fed back by the destination end for the session invitation, determining respective connectivity detection results of a connectionless transmission channel and a connected transmission channel for the communication session(604); establishing a data transmission channel with the destination end according to the connectivity detection results(606); and transmitting session data of the communication session with the destination end by means of the data transmission channel (608).

## Description

### RELATED APPLICATION

This application claims priority to Chinese Patent Application No. 202210958709.7, filed with the Chinese Patent Office on August 09, 2022 and entitled "DATA TRANSMISSION METHOD, APPARATUS, DEVICE, STORAGE MEDIUM, AND COMPUTER PROGRAM PRODUCT".

### FIELD OF THE TECHNOLOGY

This application relates to the field of computer technologies, and in particular, to a data transmission method and apparatus, a computer device, a storage medium, and a computer program product.

### BACKGROUND OF THE DISCLOSURE

A web real-time communication (WebRTC) technology is a real-time communication technology that may be used in real-time audio and video communication, such as pulling audio and video streams. A user datagram protocol (UDP) is a connectionless-oriented transmission layer communication protocol, has advantages of fast transmission, high efficiency, and a low delay, and also has disadvantages of unreliability and weak network penetration. A transmission control protocol (TCP) is a connection-oriented, reliable, and byte stream-based transmission layer communication protocol, has advantages of reliable transmission and strong network penetration, and also has disadvantages of slow transmission, low efficiency, and a high delay.

The WebRTC needs two types of interactions over a network: signaling interaction and data transmission. Based on characteristics of the UDP and the TCP, the WebRTC standard generally uses a TCP-based transmission layer protocol to implement the signaling interaction, and uses a UDP-based transmission layer protocol to transmit data. However, the UDP is restricted in many scenarios and some network environments. For example, the UDP may be limited in speed or restricted directly by different operators in different regions. For another example, the UDP is even directly prohibited under a security policy of some internal networks. This significantly affects WebRTC-based data transmission.

Currently, a countermeasure is to switch to another protocol for transmitting audio or video when a wait time expires. However, this method often produces a poor experience, requires a waiting process, may take an excessively long time, and may have a large data transmission delay. This might not applicable to a low-delay transmission scenario.

### SUMMARY

This application provides a data transmission method, executable by a computer device. The method includes the following operations:
generating an original session offer of a communication session, and transmitting the original session offer to a destination end respectively based on a connectionless-oriented transmission layer protocol and a connection-oriented transmission layer protocol, to enable the destination end to feed back a first session answer based on the connectionless-oriented transmission layer protocol and a second session answer based on the connection-oriented transmission layer protocol;
determining, based on whether receiving the first session answer and the second session answer, a connectivity detection result for a connectionless-oriented signaling transmission channel and a connection-oriented signaling transmission channel;
establishing a data transmission channel with the destination end based on the connectivity detection result; and
transmitting session data of the communication session to the destination end through the data transmission channel.

This application further provides a data transmission apparatus, and the apparatus includes:
a session offer sending module, configured to: generate an original session offer of a communication session, and transmitting the original session offer to a destination end respectively based on a connectionless-oriented transmission layer protocol and a connection-oriented transmission layer protocol, to enable the destination end to feed back a first session answer based on the connectionless-oriented transmission layer protocol and a second session answer based on the connection-oriented transmission layer protocol;
a connectivity detection module, configured to: determine, based on whether receiving the first session answer and the second session answer, a connectivity detection result for a connectionless-oriented signaling transmission channel and a connection-oriented signaling transmission channel;
a connection establishment module, configured to: establish a data transmission channel with the destination end based on the connectivity detection result; and
a transmission module, configured to transmit session data of the communication session to the destination end through the data transmission channel.

This application further provides a computer device. The computer device includes a memory and a processor. The memory stores computer-readable instructions. When the computer-readable instructions are executed by the processor, operations of the data transmission method are implemented.

This application further provides a computer-readable storage medium. The computer-readable storage medium has computer-readable instructions stored therein. When the computer-readable instructions are executed by a processor, operations of the data transmission method are implemented.

This application further provides a computer program product. The computer program product includes computer-readable instructions. When the computer-readable instructions are executed by a processor, operations of the data transmission method are implemented.

This application provides a data transmission method, executable by a computer device, and the method includes the following operations:
receiving, from a source end, a first session offer of a communication session transmitted based on a connectionless-oriented transmission layer protocol and a second session offer of the communication session transmitted based on a connection-oriented transmission layer protocol;
determining a first destination-end candidate address for the first session offer and a second destination-end candidate address for the second session offer;
generating a first session answer comprising the first destination-end candidate address and a second session answer comprising the second destination-end candidate address;
feeding back, to the source end, the first session answer based on the connectionless-oriented transmission layer protocol and the second session answer based on the connection-oriented transmission layer protocol, to enable the source end to determine, based on whether receiving the first session answer and the second session answer, a connectivity detection result for a connectionless-oriented signaling transmission channel and a connection-oriented signaling transmission channel;
establishing a data transmission channel with the source end based on the connectivity detection result; and
transmitting session data of the communication session to the source end through the data transmission channel.

A data transmission apparatus is provided, and the apparatus includes:
a session offer receiving module, configured to: receive, from a source end, a first session offer of a communication session transmitted based on a connectionless-oriented transmission layer protocol and a second session offer of the communication session transmitted based on a connection-oriented transmission layer protocol;
a source end address adding module, configured to determine a first destination-end candidate address for the first session offer and a second destination-end candidate address for the second session offer;
a session answer generation module, configured to generate a first session answer comprising the first destination-end candidate address and a second session answer comprising the second destination-end candidate address;
a session answer sending module, configured to: feed back, to the source end, the first session answer based on the connectionless-oriented transmission layer protocol and the second session answer based on the connection-oriented transmission layer protocol, to enable the source end to determine, based on whether receiving the first session answer and the second session answer, a connectivity detection result for a connectionless-oriented signaling transmission channel and a connection-oriented signaling transmission channel; and
a transmission module, configured to establish a data transmission channel with the source end based on the connectivity detection result; and transmit session data of the communication session to the source end through the data transmission channel.

This application further provides a computer device. The computer device includes a memory and a processor. The memory stores computer-readable instructions. When the computer-readable instructions are executed by the processor, operations of the data transmission method are implemented.

This application further provides a computer-readable storage medium. The computer-readable storage medium has computer-readable instructions stored therein. When the computer-readable instructions are executed by a processor, operations of the data transmission method are implemented.

This application further provides a computer program product. The computer program product includes computer-readable instructions. When the computer-readable instructions are executed by a processor, operations of the data transmission method are implemented.

Details of one or more embodiments of this application are described in the accompanying drawings and the description below. Other features, objects and advantages of this application are apparent from the description, drawings and claims.

### BRIEF DESCRIPTION OF THE DRAWINGS

To describe the technical solutions in embodiments of this application more clearly, the following briefly introduces the accompanying drawings required for describing embodiments. Apparently, the accompanying drawings in the following descriptions merely show some embodiments of this application, and a person of ordinary skill in the art may still derive other drawings based on these accompanying drawings without creative efforts.
FIG. 1 is an application environment diagram of a data transmission method according to an embodiment.
FIG. 2 is a schematic diagram of a scenario in which UDP is restricted in the related art.
FIG. 3 is a schematic diagram of another scenario in which UDP is restricted in the related art.
FIG. 4 is a schematic timing diagram for establishing a real-time communication session in the related art.
FIG. 5 is a schematic timing diagram of a data transmission method according to an embodiment.
FIG. 6 is a schematic flowchart of a data transmission method according to an embodiment.
FIG. 7 is a schematic flowchart of a data transmission method according to a specific embodiment.
FIG. 8 is a schematic flowchart of a data transmission method according to another embodiment.
FIG. 9 is a structural block diagram of a data transmission apparatus according to an embodiment.
FIG. 10 is a structural block diagram of a data transmission apparatus according to another embodiment.
FIG. 11 is an internal structural diagram of a computer device according to an embodiment.
FIG. 12 is an internal structural diagram of a computer device according to another embodiment.

### DESCRIPTION OF EMBODIMENTS

To make the objectives, technical solutions, and advantages of this application clearer, the following further describes this application in detail with reference to the accompanying drawings and embodiments. Specific embodiments described herein are merely used to explain this application but are not intended to limit this application.

Concepts involved in embodiments of this application are explained and described below.

WebRTC: Web Real-Time Communication, a real-time communication technology that may be used in real-time audio and video communication, such as pulling audio and video streams. In a client, the real-time communication may be introduced based on the WebRTC.

RTT: Round-Trip Time, round-trip time, an important performance indicator.

SDP: Session Description Protocol, a session description protocol.

ICE: Interactive Connectivity Establishment, an interactive connectivity establishment.

UDP: User Datagram Protocol, a connectionless-oriented transmission layer protocol that provides a simple and unreliable transaction-oriented messaging service.

TCP: Transmission Control Protocol, a connection-oriented, reliable, and byte stream-based transmission layer communication protocol.

DTLS: Datagram Transport Layer Security, a UDP-oriented data transport layer security protocol.

TLS: Transport Layer Security, a TCP-oriented data transport layer security protocol.

MTU: Maximum Transmission Unit.

QoS: Quality of Service, a service quality indicator.

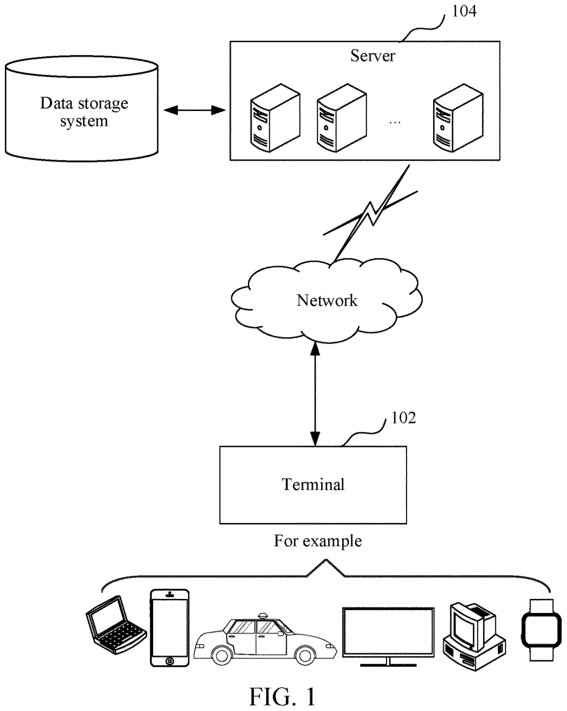

The data transmission method provided in embodiments of this application may be applied to an application environment shown in FIG. 1. A terminal 102 communicates with a server 104 by using a network. A data storage system may store data that the server 104 needs to process. The data storage system may be integrated on the server 104, or placed on a cloud or another server. In one embodiment, a client is run on the terminal 102. The client may be an instant communication client, a live video client, or the like. The client, serving as a source end, generates an original session offer of a communication session; sends, based on a connectionless-oriented transmission layer protocol and a connection-oriented transmission layer protocol respectively, the original session offer to the server 104 in which a destination end is located; determines, based on transmission statuses of session answers fed back by the server 104, a connectivity detection result for a connectionless-oriented signaling transmission channel and a connection-oriented signaling transmission channel; then, establishes a data transmission channel with the destination end based on the connectivity detection result; and transmits session data of the communication session to the server 104 in which the destination end is located through the data transmission channel.

The terminal 102 may be any computer device having computing capabilities, including but not limited to various desktop computers, notebook computers, smartphones, tablets, Internet of Things devices, and portable wearable devices. The Internet of Things device may be a smart speaker, a smart television, a smart air conditioner, a smart vehicle-mounted device, or the like. The portable wearable device may be a smart watch, a smart bracelet, a head-mounted device, or the like. The server 104 may be an independent physical server, or a server cluster or a distributed system composed of a plurality of physical servers, or may alternatively be a cloud server that provides a cloud service, a cloud database, cloud computing, a cloud function, cloud storage, a network service, cloud communication, a middleware service, a domain name service, a security service, a content delivery network (CDN), and a basic cloud computing service such as big data and an artificial intelligence platform. The terminal and the server may be connected directly or indirectly in a wired or wireless communication. This is not limited in this application.

The data transmission method provided in embodiments of this application may be implemented based on the real-time communication technology, such as the WebRTC. The data transmission method provided in this application may be used as a WebRTC SDK integrated into the client to communicate with a standard WebRTC interface. The WebRTC is a real-time communication technology. The WebRTC allows a peer-to-peer connection to be established between a client and a server, or between clients, to implement transmission of video streams and (or) audio streams or any other data. The UDP is a connectionless-oriented transmission layer communication protocol, has advantages of fast transmission, high efficiency, and a low delay, and also has disadvantages of unreliability and weak network penetration. The TCP is a connection-oriented, reliable, and byte stream-based transmission layer communication protocol, has advantages of reliable transmission and strong network penetration, and also has disadvantages of slow transmission, low efficiency, and a high delay. The WebRTC generally uses a UDP-based RTP/RTCP transmission layer protocol, and generally uses a TCP-based reliable transmission layer protocol, such as http or websocket, to implement signaling interaction in a signaling interaction phase of a WebRTC-based communication session, and uses a UDP-based transmission layer protocol to establish a connection and perform transmission in a data transmission phase.

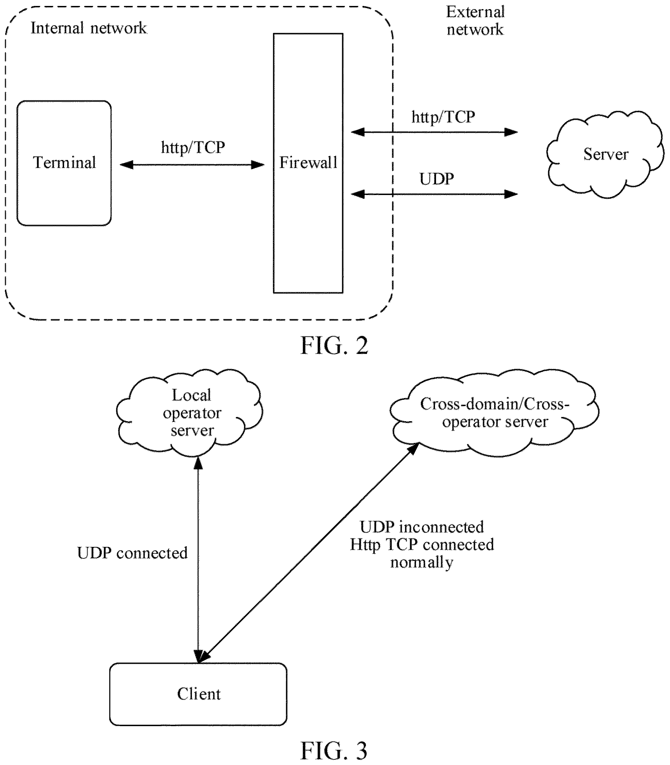

However, the UDP may be restricted in some network environments. For example, FIG. 2 is a scenario in which the UDP is restricted in the related art. In the scenario, due to a restriction of a firewall security policy of an internal network, there is a high probability that the UDP is blocked by the firewall security policy. The terminal in the internal network is basically unable to interact with an external network through the UDP and can only interact with the external network through the TCP. For another example, FIG. 3 is another scenario in which the UDP is restricted in the related art. In the scenario, due to abnormal client scheduling or heavy load on a local operator server, the client cannot connect to the local operator server, and would directly connect to another cross-domain or cross-operator server. At this time, data transmission using the UDP between the cross-domain or cross-operator is restricted.

In a specific application scenario, such as a live video scenario, a live video system generally needs to provide a user with a live streaming service of high quality and an ultra-low delay for. This generally needs to start pulling of the video stream by using a UDP-based low-delay protocol. However, in the two cases in which the UDP is restricted, transmission failure is caused, which directly manifests as a failure to start the live streaming. Currently, a countermeasure used for this scenario is to switch to another protocol for the transmission, for example, switching to a http flv protocol for the transmission when a waiting period times out and the starting of the live streaming fails. However, this method may require a waiting process. In some examples, after a UDP transmission connection times out, switching to http flv streaming may take an excessively long time, and the streaming may start slowly. This causes poor live streaming service experience.

Establishment of the communication session for real-time communication includes two phases: a signaling interaction phase and a connection establishment and data transmission phase.

The signaling interaction phase is for two communication ends to negotiate and learn information about one another, for example, session-related information of the communication session and media-related information of transmitted media data. The media-related information includes the transmission layer protocol, a transmission address and a port, a codec and another parameter, and the like. Signaling interaction may be implemented based on the session description protocol such as an SDP. The session description protocol is for exchanging information between two ends in the real-time communication technology. One end uses the SDP to inform the other end of parameters used in the media session. Generally, the SDP serving for the WebRTC may be divided into the following two parts: session-level description information, including descriptions about the session and time, and specifically including version information, a session identifier, a session name, session time, and the like; and a media-level part, including descriptions about audio and video media and a network, and specifically including audio and video information, a media type and a parameter, at least one candidate address and a port for transmitting the media data, a network protocol type and a parameter, an audio and video encoding type and a parameter, and the like.

In the connection establishment and data transmission phase, a connection between one end and the other end is established based on the session information and media transmission information negotiated in the first phase, and session data transmission starts.

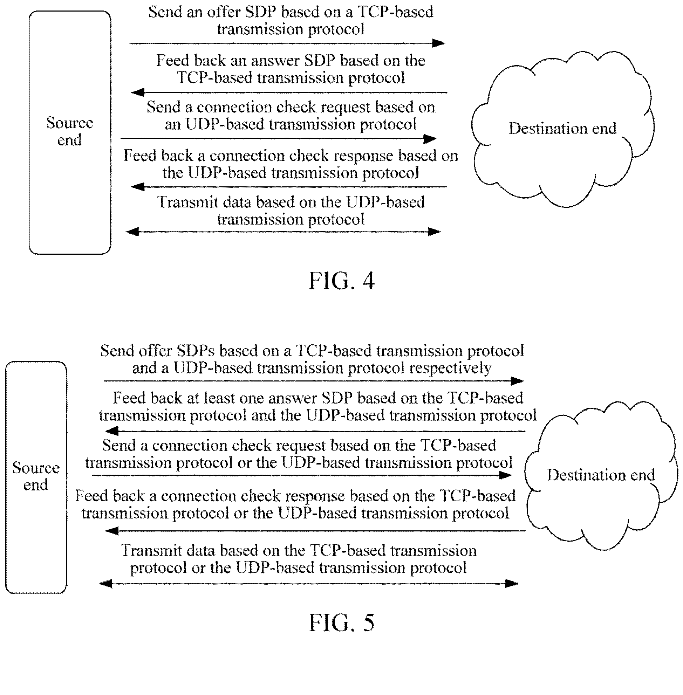

FIG. 4 is a schematic diagram of establishing a data transmission channel of a real-time communication session between a source end and a destination end in the related art. The real-time communication session may be a WebRTC-based real-time communication session. First, the source end sets and stores a local SDP, where the SDP includes at least one candidate address of the source end that may be configured for the data transmission; then, sends a session offer including the SDP, i.e., an offer SDP, to the destination end (where in an end-to-end scenario, the offer SDP is sent to the destination end by using a signaling server; and in an end-to-server scenario, the offer SDP is directly sent to the server). After obtaining the session offer, the destination end stores the candidate address of the source end, and triggers to set and store the local SDP, where the SDP includes at least one candidate address of the destination end for the data transmission. The destination end creates a session answer, i.e., an answer SDP, and sends the candidate address of the destination end that is configured for the data transmission to the source end (where in the end-to-end scenario, the answer SDP is sent to the source end by using the signaling server; and in the end-to-server scenario, the answer SDP is directly sent to the server), to implement candidate address exchange. Then, the source end may determine at least one candidate address combination by using the candidate addresses of the source end and the destination end; initiate a connection check request (e.g., a Stun Binding Request) based on a candidate address combination having the highest priority; and record a connection status of the candidate address combination based on a connection check response (e.g., a Stun Binding Response) of the destination end. If the connection status is a ready-to-send state, data is transmitted between the source end and the destination end by using a data transmission channel determined based on the candidate address combination. If the destination end does not feed back the session answer or the destination end does not feed back the connection check response, the data needs to be retransmitted until timeout. Switching to another transmission layer protocol is only considered after the timeout.

As shown in FIG. 4, in a standard WebRTC interaction process, the offer SDP and the answer SDP in the signaling interaction phase are sent by using the TCP-based transmission layer protocol. The data transmission in the connection establishment and data transmission phase is sent by using the UDP-based transmission layer protocol. However, based on the foregoing descriptions, the UDP is restricted or cannot be used in many scenarios. Because it is impossible to know in advance whether the UDP can be used, a success rate of the signaling interaction may be low, switching to another protocol after a timeout period may take an excessively long time, and the service quality of low-delay data transmission may be poor.

FIG. 5 is a schematic diagram of a data transmission method according to an embodiment of this application. Refer to FIG. 5. A source end sets and stores a local SDP, where an SDP includes at least one candidate address of the source end that is configured for data transmission and may include all possible candidate addresses for different transmission layer protocols. Such SDP may regarded as an original session offer. Then, the source end sends two session offers (also referred to as offer SDPs) corresponding to two different transmission layer protocols (i.e., UDP-based and TCP-based), to a destination end by using a UDP-based transmission layer protocol and a TCP-based transmission layer protocol respectively. If the destination end obtains the two session offers, the destination end may store the at least one candidate address of the source end, and trigger to set and store the local SDP, where the local SDP includes at least one candidate address of the destination end for the data transmission and may include all possible candidate addresses for different transmission layer protocols. The destination end creates two session answers (also referred to as answer SDPs), and sends the at least one candidate address of the destination end that is configured for the data transmission to the source end by using the UDP-based transmission layer protocol and the TCP-based transmission layer protocol respectively, to implement candidate address exchange. If the source end receives one of the two answer SDPs, the source end may determine that a transmission channel based on the corresponding transmission layer protocol is in a connected state. Then, the source end may directly determine at least one candidate address combination based on the candidate addresses of the source end and the destination end and the related transmission layer protocol; initiate a connection check request (e.g., a Stun Binding Request) based on a candidate address combination having the highest priority by using the related transmission layer protocol (the TCP or the UDP) corresponding to the candidate address combination; and record the connection status of the candidate address combination based on a connection check response (e.g., a Stun Binding Response) of the destination end. If the connection status of the candidate address combination is a ready-to-send state, data is transmitted between the source end and the destination end by using a UDP-based or TCP-based data transmission channel determined based on the candidate address combination.

In comparison with a case in which the interaction signaling is transmitted by using the TCP in the signaling interaction phase shown in FIG. 4, the interaction process provided in FIG. 5 uses the connectionless-oriented transmission layer protocol and the connection-oriented transmission layer protocol, in the signaling interaction phase of the source end and the destination end, to complement each other. By using dual-channel signaling interaction of the connectionless-oriented signaling transmission channel and the connection-oriented signaling transmission channel, connectivity detection of both the connectionless-oriented signaling transmission channel and the connection-oriented signaling transmission channel may be implemented to improve a success rate of the signaling interaction. Therefore, the source end may directly and seamlessly determine a protocol to establish the connection to the destination end based on the detection results directly, without waiting, and with low data transmission delay.

In the data transmission method provided in embodiments of this application, the source end generates an original session offer of the communication session; sends the original session offer to the destination end based on the connectionless-oriented transmission layer protocol and the connection-oriented transmission layer protocol, respectively; and determines, based on transmission statuses of session answers fed back by the destination end, a connectivity detection result for a connectionless-oriented signaling transmission channel and a connection-oriented signaling transmission channel. In this way, the connectionless-oriented signaling transmission channel and the connection-oriented signaling transmission channel can be adaptively selected based on the connectivity detection result directly, to seamlessly establish the connection to the destination end. Therefore, in the data transmission phase, the session data of the communication session is transmitted to the destination end based on the established data transmission channel. In the entire process, there is no need to establish the connection in another after a timeout period expires. Connectivity detection of the two types of channel is directly implemented during signaling interaction. This greatly reduces the data transmission delay, and improves the service experience.

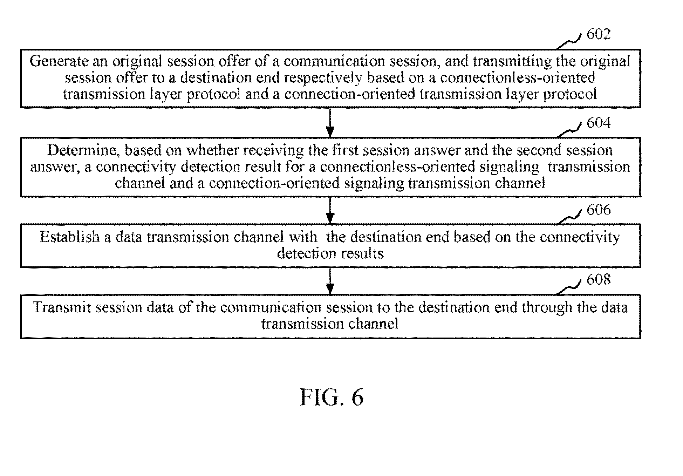

In one embodiment, as shown in FIG. 6, a data transmission method is provided. That the method is applied to the terminal 102 in FIG. 1 is used as an example for description, and the method includes the following operations:
Operation 602: Generate an original session offer of a communication session, and transmitting the original session offer to a destination end respectively based on a connectionless-oriented transmission layer protocol and a connection-oriented transmission layer protocol, to enable the destination end to feed back a first session answer based on the connectionless-oriented transmission layer protocol and a second session answer based on the connection-oriented transmission layer protocol.

This embodiment of this application relates to a source end and the destination end. The source end is an end that initiates the session offer, and the destination end is an end that feeds back a session answer. After a data transmission channel is successfully established between the source end and the destination end, session data may be sent to the destination end from the source end, and data may also be sent to the source end from the destination end. Thus, the destination end is a receiving end or a transmitting end. The source end and the destination end may be a client and a server, namely, in an end-to-server scenario. The source end and the destination end may alternatively be a client and a client, namely, in an end-to-end scenario. Generally, before the source end and the destination end transmit the data, or before the data transmission channel is established, the communication session between the source end and the destination end further needs to be established. The communication session has a session identifier representing interaction of the session data between the source end and the destination end.

The original session offer is an instruction that is initiated by the source end and that indicates session description information of the source end. The offer carries a source end SDP, referred to as an offer SDP. Similarity, the session answer is an instruction that is fed back by the destination end and that indicates session description information of the destination end. The answer carries a destination end SDP, referred to as an answer SDP. The SDP is configured for exchanging information between two ends in the real-time communication technology. One end uses the SDP to inform the other end of parameters used in a media session. In one embodiment, in the end-to-server scenario, a terminal pulls a media stream from a server by using a client. The terminal may create a communication session in response to a trigger operation of pulling the media stream from the server, obtain session description information of the communication session, and generate the original session offer of the communication session based on the session description information. In one embodiment, in the end-to-end scenario, a terminal serving as the source end requests a server to forward the generated session offer to a peer end by using the server. After receiving the session offers, the peer end generates corresponding session answers, and requests the server to forward the generated session answers to the source end by using the server.

In one embodiment, the method is applied to a WebRTC structure. In the end-to-end scenario, a terminal serving as the source end may set a local SDP by invoking peerConnection.addIceCandidate in the standard WebRTC structure; set a local SDP for a peerConnection object of the source end; and create, by invoking a peerConnection.createOffer, two offer SDPs including the local SDP corresponding to a TCP-based transmission layer protocol and a UDP-based transmission layer protocol, respectively. After successfully creating the offer SDPs, the source end sends the offer SDPs to the server, and requests the server to forward the offer SDPs to the destination end. After receiving the offer SDPs, the destination end invokes peerConnection.setRemoteDescription to store the offer SDPs of the source end; assigns the offer SDPs of the source end to a peerConnection object of the destination end; then invokes peerConnection.addIceCandidate to obtain the local SDP of the destination end; stores the local SDP of the destination end to the peerConnection object of the destination end; and invokes peerConnection.createAnswer to create two answer SDPs corresponding to a TCP-based transmission layer protocol and a UDP-based transmission layer protocol, respectively. After successfully creating answer SDPs, the destination end sends the answer SDPs to the server, and requests the server to forward the answer SDPs to the source end. The source end invokes the peerConnection.setRemoteDescription to store the answer SDPs of the destination end, and assigns the answer SDPs of the destination end to the peerConnection object of the source end. Therefore, SDP information interaction between the source end and the destination end is implemented. The SDP includes data transmission candidate addresses used by both the source end and the destination end, to implement the candidate address exchange. The peerConnection objects of the source end and the destination end each includes candidate address information of the source end and the destination end, and may be used for the subsequent connection check.

In one embodiment, in the end-to-server scenario, a terminal serving as the source end may set a local SDP by invoking a standard WebRTC interface
peerConnection.addIceCandidate. Because the terminal is directly connected to the server, and the terminal requests data or uploads data from the server, the local SDP may not include candidate address information configured for the data transmission of the terminal, because the source-end candidate address information may be stored in the server in advance. The terminal invokes a peerConnection.createOffer to create two offer SDPs including the local SDP corresponding to a TCP-based transmission layer protocol and a UDP-based transmission layer protocol, respectively. After successfully creating the offer SDPs, the terminal sends the offer SDPs to the server. The server invokes setRemoteDescription to store the offer SDPs of the source end; then invokes the peerConnection.addIceCandidate to obtain a local SDP of the server; stores the local SDP of the destination end; creates two kinds of answer signaling including the local SDP corresponding to a TCP-based transmission layer protocol and a UDP-based transmission layer protocol, respectively; and sends the answer SDPs to the terminal. The terminal invokes the setRemoteDescription to store the answer SDPs of the server. The terminal obtains the destination-end candidate address configured for the data transmission from the SDP of the server. This also implements the candidate address exchange.

The following is an example.

The source-end candidate addresses are:
UDP: 192.168.1.100:60001, 172.168.40.6:60002; and
TCP: 192.168.1.100:60003, 172.168.40.6:60004.

The destination-end candidate addresses are:
UDP: 183.60.131.111:8000, 183.60.131.112:8000; and
TCP: 183.60.131.113:8080, 183.60.131.114:8080.

If the source end does not receive the answer UDP fed back by the destination end, the source end may determine that the UDP-based transmission channel cannot be connected. Then, the source end may directly generate four TCP-based candidate address combinations, which are as follows in descending order of priorities:
192.168.1.100:60003, and 183.60.131.113:8080;
172.168.40.6:60004, and 183.60.131.113:8080;
192.168.1.100:60003, and 183.60.131.114:8080; and
172.168.40.6:60004, and 183.60.131.114:8080.

The source end may perform connection check in sequence based on the priorities. When the connection status is ready-to-send, an address combination for the data transmission is obtained. The source end does not need to wait for the UDP connection to time out before considering switching the transmission layer protocol. This reduces a delay of waiting during the data transmission.

In embodiments of this application, the connection-oriented transmission layer protocol specifies a reliable connection to be built up between the source end and the destination end before data transmission, the signaling channel used for the reliable connection referring to the connection-oriented signaling transmission channel. The connectionless-oriented transmission layer protocol specifies no connection to be built up between the source end and the destination end before data transmission. In the connectionless-oriented transmission, the source end throws the data onto the network as quickly as possible, while the destination end reads a message segment from the message queue to deal with the data indicated by the message segment. In this case, the signaling channel used for the no connection referring to the connectionless-oriented signaling transmission channel. The connection-oriented transmission layer protocol does not only mean the TCP, and may alternatively be another TCP-based transmission layer protocol, such as a hyper text transfer protocol (HTTP, a simple request-response protocol that generally runs on the TCP), or a WebSocket (a protocol for full-duplex communication over a single TCP connection). The connectionless-oriented transmission layer protocol does not only mean the UDP, and may alternatively be another UDP-based transmission layer protocol, such as a quick UDP internet connection (QUIC, a UDP-based and low delay internet transmission layer protocol), or a secure reliable transport (SRT, a secure reliable transport, SRT for short, an UDP protocol-based open source internet transmission layer protocol). Most embodiments of this application are briefly described, and the TCP and the UDP are directly used for description.

In one embodiment, for ease of transmission, the terminal may further compress the original session offer, to obtain binary offer data. Therefore, the original session offer is compressed into the binary offer data within one MTU (generally 1200 bytes). Then, the binary offer data obtained through compression is sent to the destination end based on the connectionless-oriented transmission layer protocol and the connection-oriented transmission layer protocol respectively. A compression manner is not limited herein.

In one embodiment, the terminal encapsulates, based on the connectionless-oriented transmission layer protocol, the original session offer into a first interaction signaling as a first session offer; encapsulates, based on the connection-oriented transmission layer protocol, the original session offer into a second interaction signaling as a second session offer; transmits the first session offer to the destination end by using the connectionless-oriented transmission layer protocol; and transmits the second session offer to the destination end by using the connection-oriented transmission layer protocol. The encapsulating means adding a header to the original session offer in the first interaction signaling, and the header includes a segment to indicate the connectionless-oriented transmission layer protocol or the connection-oriented transmission layer protocol, wherein the original session offer may include two source-end candidate addresses corresponding to the connectionless-oriented transmission layer protocol and the connection-oriented transmission layer protocol respectively; or, the encapsulating means selecting one source-end candidate address from the original session offer corresponding to the connectionless-oriented transmission layer protocol or the connection-oriented transmission layer protocol, and then delete another one. Further, in some embodiments, the terminal generates the first interaction signaling based on the binary offer data and the connectionless-oriented transmission layer protocol, and generates the second interaction signaling based on the binary offer data and the connection-oriented transmission layer protocol.

Operation 604: Determine, based on whether receiving the first session answer and the second session answer, a connectivity detection result for a connectionless-oriented signaling transmission channel and a connection-oriented signaling transmission channel.

The source end sends the session offers by using the connectionless-oriented transmission layer protocol and the connection-oriented transmission layer protocol respectively. When the connectionless-oriented signaling transmission channel from the source end to the destination end is in a connected state, the destination end may receive the first session offer. When the connection-oriented signaling transmission channel from the source end to the destination end is in the connected state, the destination end may receive the second session offer. Otherwise, the destination end cannot receive the session offers or can only receive one session offer.

When the destination end receives the first session offer transmitted by the source end by using the connectionless-oriented transmission layer protocol, the destination end feeds back a first session answer by using the connectionless-oriented transmission layer protocol. When the destination end receives the second session offer sent by the source end by using the connection-oriented transmission layer protocol, the destination end feeds back a second session answer by using the connection-oriented transmission layer protocol.

When the connectionless-oriented signaling transmission channel from the destination end to the source end is in the connected state, the source end may receive the first session answer. When the connection-oriented signaling transmission channel from the destination end to the source end is in the connected state, the source end may receive the second session answer. Otherwise, the source end cannot receive the session answers or can only receive one session answer.

Therefore, if the source end can receive the first session answer fed back by the destination end by using the connectionless-oriented transmission layer protocol, both the connectionless-oriented signaling transmission channel from the source end to the destination end and the connectionless-oriented signaling transmission channel from the destination end to the source end are in the connected state. To be specific, the connectionless-oriented signaling transmission channel between the source end and the destination end is in the connected state. If the source end can receive the second session answer fed back by the destination end by using the connection-oriented transmission layer protocol, both the connection-oriented signaling transmission channel from the source end to the destination end and the connection-oriented signaling transmission channel from the destination end to the source end are in the connected state. To be specific, the connection-oriented signaling transmission channel between the source end and the destination end is in the connected state.

Therefore, the transmission statuses of the session answers fed back by the destination end for the session offers may include four types:
no session answer fed back by the destination end is received;
only the first session answer fed back by the destination end by using the connectionless-oriented transmission layer protocol is received;
only the second session answer fed back by the destination end by using the connection-oriented transmission layer protocol is received; or
the first session answer fed back by the destination end by using the connectionless-oriented transmission layer protocol and the second session answer fed back by the destination end by using the connection-oriented transmission layer protocol are received (the timing of receiving the first session answer and the timing of receiving the second session answer may be different).

Based on the four different transmission statuses, the terminal serving as the source end may determine a connectivity detection result of the connectionless-oriented signaling transmission channel and the connection-oriented signaling transmission channel of the communication session, to be specific:
both the connectionless-oriented signaling transmission channel and the connection-oriented signaling transmission channel of the communication session are in an unconnected state;
only the connectionless-oriented signaling transmission channel of the communication session is in the connected state;
only the connection-oriented signaling transmission channel of the communication session is in the connected state; or
both the connectionless-oriented signaling transmission channel and the connection-oriented signaling transmission channel of the communication session are in the connected state.

The connected state means that data can be received both by the source end and the destination end. The unconnected state means that data cannot be received by at least one of the source end and the destination end.

In the signaling interaction phase of the source end and the destination end, the connectionless-oriented transmission layer protocol and the connection-oriented transmission layer protocol are used to complement each other with respective advantages and disadvantages, and by using dual-channel signaling interaction of the connectionless-oriented signaling transmission channel and the connection-oriented signaling transmission channel, the connectivity detection of both the connectionless-oriented signaling transmission channel and the connection-oriented signaling transmission channel can be directly implemented when a success rate of the signaling interaction is improved. Subsequently, the terminal may directly initiate the corresponding connection check based on the detection result, without having to consider switching the transmission layer protocol after the connection times out.

In one embodiment, if the terminal only receives the first session answer fed back by the destination end for the first interaction signaling by using the connectionless-oriented transmission layer protocol, the terminal stores a first destination-end candidate address comprised in the first session answer, the first destination-end candidate address being used to transmit the session data, and determines that the connectionless-oriented signaling transmission channel of the communication session is in the connected state. In one embodiment, the terminal may invoke peerConnection.setRemoteDescription to store the first destination-end candidate address in the first session answer of the destination end, and assign the first destination-end candidate address to a peerConnection object of the source end, where the peerConnection object is configured for generating a candidate address combination subsequently. Because the first session answer is fed back by using the connectionless-oriented transmission layer protocol, the candidate address in the first session answer is a network address that may be used by the connectionless-oriented signaling transmission channel of the communication session.

In one embodiment, if the terminal only receives the second session answer fed back by the destination end for the second interaction signaling by using the connection-oriented transmission layer protocol, the terminal stores a second destination-end candidate address comprised in the second session answer, the second destination-end candidate address being used to transmit the session data, and determines that the connection-oriented signaling transmission channel of the communication session is in the connected state. In one embodiment, the terminal may invoke peerConnection.setRemoteDescription to store the second destination-end candidate address in the second session answer of the destination end, and assign the second destination-end candidate address to the peerConnection object of the source end, where the peerConnection object is configured for generating the candidate address combination subsequently. Because the second session answer is fed back by using the connection-oriented transmission layer protocol, the candidate address in the second session answer is a network address that may be used by the connection-oriented signaling transmission channel of the communication session.

In one embodiment, if the terminal receives first session answer fed back by the destination end for the first interaction signaling by using the connectionless-oriented transmission layer protocol, and further receives the second session answer fed back by the destination end for the second interaction signaling by using the connection-oriented transmission layer protocol, the terminal stores the first and second destination-end candidate addresses that are used to transmit the session data and that are in the two session answers, and determines that both the connectionless-oriented signaling transmission channel and the connection-oriented signaling transmission channel of the communication session are in the connected state. In one embodiment, if the terminal first receives the first session answer, the terminal may invoke peerConnection.setRemoteDescription to store the candidate address in the first session answer. Then, if the terminal receives the second session answer with remote candidate address information sent by the destination end again, the terminal directly invokes peerConnection.addIceCandidate to store the newly received candidate address, and assign the newly received candidate address to the peerConnection object of the source end.

If the destination end receives the binary offer data obtained through compression, the destination end needs to decompress the binary offer data first, to obtain the corresponding session offer. Similarity, for ease of transmission, the destination end may also compress the generated session answers, to obtain corresponding binary answer data, and then feed back the session answers based on corresponding binary answer data by using the connectionless-oriented transmission layer protocol and the connection-oriented transmission layer protocol respectively. In this case, the source end may also need to decompress the received binary answer data, to obtain the corresponding session answers.

Operation 606: Establish the data transmission channel with the destination end based on the connectivity detection result.

In one embodiment, after obtaining the connectivity detection result, the terminal may determine in advance one channel between the connectionless-oriented signaling transmission channel and the connection-oriented signaling transmission channel that can successfully establish the connection, and adaptively select one channel to establish the connection for data transmission.

Before establishing the connection, the terminal may further perform the connection check based on the candidate address combination, to determine a final path for transmitting the session data. In the foregoing signaling interaction phase, the terminal obtains the candidate addresses respectively corresponding to the local and the destination end. The terminal may combine these candidate addresses, to obtain a plurality of candidate address combinations, and prioritize these candidate address combinations. The priority is determined based on parameters such as an address type and a media type. For example, considering factors such as a delay, a bandwidth resource, and a packet loss, a host-type candidate address generally has a higher priority. Each candidate address combination may be configured to transmit the session data of the communication session. The terminal first initiates, based on priorities of theses candidate address combinations, a connection check request to the destination end for a candidate address combination having the highest priority. If a connection check response fed back by the destination end can be received, the candidate address combination is connected, and both the source end and the destination end may use the candidate address combination to transmit the session data. Otherwise, if the connection check response fed back by the destination end cannot be received, or feedback of the connection check response times out, the source end may obtain a next candidate address combination, and initiate a connection check request for the next candidate address combination. In this way, a final path and a channel for transmitting the session data can be determined.

In one embodiment, in response to the connectionless-oriented signaling transmission channel being in the connected state, the terminal initiates, based on a candidate address combination comprising a first address in a first source-end candidate address and a second address in the first destination-end candidate address, a connection check request of the candidate address combination; and when receiving a connection check response fed back by the destination end in response to the connection check request, the terminal establishes a connectionless-oriented data transmission channel with the destination end based on the candidate address combination. The first source-end candidate address may be stored in the terminal, and includes multiple addresses, for example, UDP: 192.168.1.100:60001, 172.168.40.6:60002.

In one embodiment, in response to the connection-oriented signaling transmission channel being in the connected state, the terminal initiates, based on a candidate address combination comprising a first address in a first source-end candidate address and a second address in the second destination-end candidate address, a connection check request of the candidate address combination; and when receiving a connection check response fed back by the destination end in response to the connection check request, the terminal establishes a connection-oriented data transmission channel with the destination end based on the candidate address combination. The second source-end candidate address may be stored in the terminal, and includes multiple addresses, for example, TCP: 192.168.1.100:60003, 172.168.40.6:60004.

In one embodiment, if both the connectionless-oriented signaling transmission channel and the connection-oriented signaling transmission channel of the communication session are in the connected state, the terminal may select one channel to establish the data transmission channel based on the situation. Generally, because the connectionless-oriented signaling transmission channel has a lower delay, the session data is transmitted first by establishing the connectionless-oriented signaling transmission channel. It is clear that, the terminal may alternatively select the channel based on a timing sequence of receiving the session answers, round-trip time, transmission quality (that is determined based on a frame rate and a transmission quality parameter in the SDP), and the like of the two channels. For example, when the transmission quality of the connectionless-oriented signaling transmission channel is poor, the connection-oriented signaling transmission channel is still selected to be established to transmit the session data.

Operation 608: Transmit the session data of the communication session to the destination end through the data transmission channel.

After the data transmission channel between the source end and the destination end is successfully established, the session data of the communication session, such as a live media stream to be pulled for the communication session, can be transmitted between the source end and the destination end.

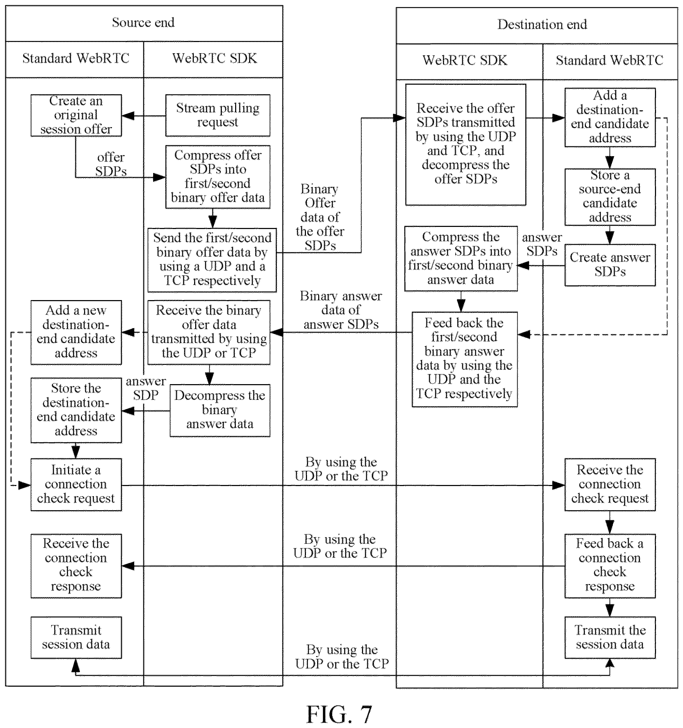

FIG. 7 is a schematic flowchart of a data transmission method according to a specific embodiment. Refer to FIG. 7. A data transmission method provided in embodiments of this application is described in detail from a source end and a destination end. Refer to FIG. 7. A client serves as the source end, and a server serves as the destination end. The source end includes a standard WebRTC structure and a WebRTC SDK integrated in the client. In addition, the destination end includes the standard WebRTC structure and the WebRTC SDK integrated into the client. The method in embodiments of this application may be implemented by using the WebRTC SDK.

In one embodiment, in the source end, a pulling request is received by using the WebRTC SDK. A standard interface peerConnection.addIceCandidate of the WebRTC structure may be triggered to be invoked to set a local SDP. Based on the local SDP (i.e., the original offer SDP), the standard interface peerConnection.addIceCandidate of the WebRTC structure may be invoked create two offer SDPs corresponding to a TCP-based transmission layer protocol and a UDP-based transmission layer protocol, respectively. After the offer SDPs is successfully created, for ease of transmission, the offer SDPs may be compressed into first binary offer data and second binary offer data. The first binary offer data and the second binary offer data are transmitted to a destination end in both a UDP-based transmission layer protocol and a TCP-based transmission layer protocol respectively (where UDP transmission may use a pure UDP, or another UDP-based protocol, such as a QUIC and an SRT, and TCP transmission may use a pure TCP to obtain another TCP-based protocol such as an HTTP and a WebSocket).

Then, the WebRTC SDK of the destination end creates a session answer based on an arrival situation of the binary offer data sent by the source end. If the first binary offer data transmitted by using the UDP is received, the WebRTC SDK invokes a peerConnection.addIceCandidate to add a UDP candidate address of the destination end, decompresses the received first binary offer data to obtain the offer SDP, and then invokes peerConnection.setRemoteDescription to store the UDP candidate address of the source end. In addition, the destination end further invokes a peerConnection.createAnswer based on the server UDP candidate address to create a first answer SDP, and performs binary compression to obtain the binary offer data, where the binary offer data is fed back to the source end by using the UDP.

If the second binary offer data transmitted by using the TCP is received, the WebRTC SDK invokes a peerConnection.addIceCandidate to add a server TCP candidate address, decompresses the received second binary offer data to obtain the offer SDP, and then invokes peerConnection.setRemoteDescription to store the TCP candidate address of the source end. In addition, the destination end further invokes a peerConnection.createAnswer based on the server TCP candidate address to create a second answer SDP, and performs binary compression to obtain the second binary answer data, where the second binary answer data is fed back to the source end by using the TCP.

If in a destination end, reception of the second binary offer data sent by the source end is later than sending of the first answer SDP, the two pieces of the binary offer data are received one after the other. In this case, the WebRTC SDK of the destination end directly invokes a peerConnection.addIceCandidate to add a candidate address later received, and sends the candidate address separately to the source end.

Examples of candidates of the UDP and the TCP are as follows, where the candidate addresses may be sent to the source end by using the answer SDP or may be directly sent to the source end separately:
a=candidate: 1 1 UDP 2130806431 183.60.131.113 8000 typ host; and
a=candidate:2 1 TCP 2111832063 183.60.131.113 8080 typ host tcptype active

The first is the UDP candidate address, and the second is the TCP candidate address.

After receiving the binary answer data of the answer SDP, the source end decompresses and restores the answer SDP; invokes the peerConnection.setRemoteDescription based on a destination-end candidate address to store the SDP of the destination end; assigns the SDP of the destination end to a peerConnection object of the source end; triggers a combination comprising the candidate address of the source end and the destination end in the peerConnection object based on a standard WebRTC to initiate a connection check.

If the source end further separately receives the destination-end candidate address sent by the destination end subsequently, the source end invokes the peerConnection.addIceCandidate to set a new destination-end candidate address to the standard WebRTC. The standard WebRTC may initiates the connection check to the new destination-end candidate address. After the connection check passes, the server may adaptively select any one of the connection for the data transmission based on transmission statuses.

In one specific embodiment, the data transmission method is executed by a computer device in which the source end is located, and includes the following operations:
creating the communication session in response to a trigger operation of pulling a media stream from the server;
obtaining session description information of the communication session;
generating an original session offer of the communication session based on the session description information;
compressing the original session offer, to obtain the binary offer data;
encapsulating the binary offer data into first interaction signaling based on a connectionless-oriented transmission layer protocol;
encapsulating the binary offer data into second interaction signaling based on a connection-oriented transmission layer protocol;
sending the first interaction signaling to the destination end by using the connectionless-oriented transmission layer protocol, and sending the second interaction signaling to the destination end by using the connection-oriented transmission layer protocol;
in response to only receiving the first session answer fed back by the destination end for the first interaction signaling by using the connectionless-oriented transmission layer protocol, storing a first destination-end candidate address comprised in the first session answer, the first destination-end candidate address being used to transmit the session data, and determining that the connectionless-oriented signaling transmission channel is in a connected state; or
in response to only receiving the second session answer fed back by the destination end for the second interaction signaling by using the connection-oriented transmission layer protocol, storing a second destination-end candidate address comprised in the second session answer, the second destination-end candidate address being used to transmit the session data, and determining that the connection-oriented signaling transmission channel is in a connected state;
after receiving the first session answer and storing a first destination-end candidate address comprised in the first session answer, the first destination-end candidate address being used to transmit the session data, in response to receiving the second session answer, storing a second destination-end candidate address comprised in the second session answer; and determining that both the connectionless-oriented signaling transmission channel and the connection-oriented signaling transmission channel are in a connected state;
in response to the connectionless-oriented signaling transmission channel being in the connected state, initiating, based on a candidate address combination comprising a first address in a first source-end candidate address and a second address in the first destination-end candidate address, a connection check request of the candidate address combination; and when receiving a connection check response fed back by the destination end in response to the connection check request, establishing a connectionless-oriented data transmission channel with the destination end based on the candidate address combination; or
in response to the connection-oriented signaling transmission channel being in the connected state, initiating, based on a candidate address combination comprising a first address in a first source-end candidate address and a second address in the second destination-end candidate address, a connection check request of the candidate address combination; and when receiving a connection check response fed back by the destination end in response to the connection check request, establishing a connection-oriented data transmission channel with the destination end based on the candidate address combination; or
if both the connectionless-oriented signaling transmission channel and the connection-oriented signaling transmission channel of the communication session are in the connected state, adaptively selecting one to establish the data transmission channel based on respective transmission quality; and
transmitting the session data of the communication session to the destination end through the data transmission channel.
The data transmission method uses respective advantages and disadvantages of the UDP and the TCP for complementation, to implement a UDP connectivity detection and a TCP connectivity detection by using UDP and TCP dual-channel signaling interaction; and establish a connection through a WebRTC adaptive selection of the UDP channel or the TCP channel to transmit media data. This improves service quality of a WebRTC-based service, and solves a transmission failure problem caused when the UDP cannot communicate, the signaling interaction is successful but the data transmission cannot establish the connection, or a problem of a long delay caused by switching to another transmission layer protocol after a timeout period expires. This may complement disadvantages of only depending on the UDP for the data transmission, improve a service quality QoS indicator and product technology completeness, and improve product experience.

Embodiments of this application further provide a data transmission method, may be applied to an application environment shown in FIG. 1. A terminal 102 communicates with a server 104 by using a network. A data storage system may store data that the server 104 needs to process. The data storage system may be integrated on the server 104, or placed on a cloud or another server. In one embodiment, the server 104 serving as a destination end, receives, in sequence, session offers of a communication session sent by the terminal 102 serving as a source end based on a connectionless-oriented transmission layer protocol and a connection-oriented transmission layer protocol respectively; collects the source-end candidate addresses that are used to transmit session data and that are in the session offers; generates session answers in response to the session offers based on the destination-end candidate address; feed back the session answers to the source end based on the connectionless-oriented transmission layer protocol and the connection-oriented transmission layer protocol respectively; establishes a data transmission channel between the destination end and the source end based on the source-end candidate address and the destination-end candidate address; and transmits the session data of the communication session to the source end through the data transmission channel.

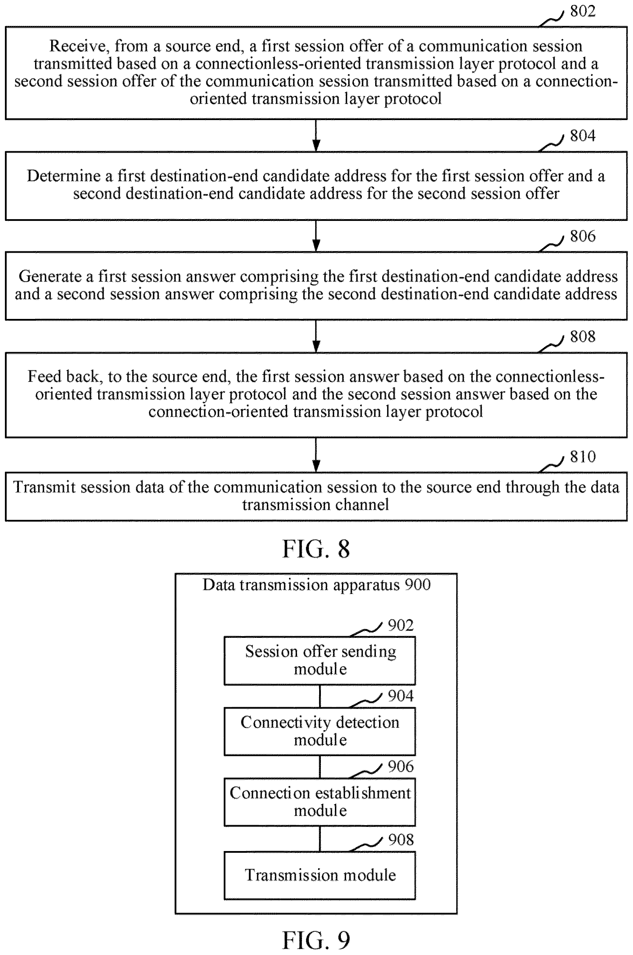

In one embodiment, as shown in FIG. 8, a data transmission method is provided and executed by a computer device in which a destination end is located. That the method is applied to the server 104 in FIG. 1 serving as the computer device in which the destination end is located is used as an example for description. Embodiments of operations of the data transmission method refer to the foregoing description. The method specifically includes the following operations:

Operation 802: Receive, from a source end, a first session offer of a communication session transmitted based on a connectionless-oriented transmission layer protocol and a second session offer of the communication session transmitted based on a connection-oriented transmission layer protocol.

The source end sends the session offers by using the connectionless-oriented transmission layer protocol and the connection-oriented transmission layer protocol respectively. When the connectionless-oriented signaling transmission channel from the source end to the destination end is in a connected state, the destination end may receive the first session offer. When the connection-oriented signaling transmission channel from the source end to the destination end is in the connected state, the destination end may receive the second session offer. Otherwise, the destination end cannot receive the session offers or can only receive one session offer.

Operation 804: Determine a first destination-end candidate address for the first session offer and a second destination-end candidate address for the second session offer.

When the destination end only receives one of the first session offer and the second session offer, the destination end only determines the respective destination-end candidate address. When the destination end does not receive any session offer, no session answer is feed back to the source end.

Operation 806: Generate a first session answer comprising the first destination-end candidate address and a second session answer comprising the second destination-end candidate address.

Operation 808: Feed back, to the source end, the first session answer based on the connectionless-oriented transmission layer protocol and the second session answer based on the connection-oriented transmission layer protocol, to enable the source end to determine, based on whether receiving the first session answer and the second session answer, a connectivity detection result for a connectionless-oriented signaling transmission channel and a connection-oriented signaling transmission channel.

After receiving the offer SDP, the server serving as the destination end invokes peerConnection.setRemoteDescription to store the offer SDPs of the source end; assigns the offer SDPs of the source end to a peerConnection object of the destination end; then invokes peerConnection.addIceCandidate to obtain the local SDP of the destination end; stores the local SDP of the destination end to the peerConnection object of the destination end; and invokes peerConnection.createAnswer to create two answer SDPs corresponding to a TCP-based transmission layer protocol and a UDP-based transmission layer protocol, respectively. After successfully creating answer SDPs, the server sends the session answer to the terminal.

When the destination end receives the first session offer transmitted by the source end by using the connectionless-oriented transmission layer protocol, the destination end feeds back a first session answer by using the connectionless-oriented transmission layer protocol. When the destination end receives the second session offer sent by the source end by using the connection-oriented transmission layer protocol, the destination end feeds back a second session answer by using the connection-oriented transmission layer protocol.

When the connectionless-oriented signaling transmission channel from the destination end to the source end is in the connected state, the source end may receive the first session answer. When the connection-oriented signaling transmission channel from the destination end to the source end is in the connected state, the source end may receive the second session answer. Otherwise, the source end cannot receive the session answers or can only receive one session answer.

If the source end can receive the first session answer fed back by the destination end by using the connectionless-oriented transmission layer protocol, both the connectionless-oriented signaling transmission channel from the source end to the destination end and the connectionless-oriented signaling transmission channel from the destination end to the source end are in the connected state. To be specific, the connectionless-oriented signaling transmission channel between the source end and the destination end is in the connected state. If the source end can receive the second session answer fed back by the destination end by using the connection-oriented transmission layer protocol, both the connection-oriented signaling transmission channel from the source end to the destination end and the connection-oriented signaling transmission channel from the destination end to the source end are in the connected state. To be specific, the connection-oriented signaling transmission channel between the source end and the destination end is in the connected state.

Therefore, the transmission statuses of the session answers fed back by the destination end for the session offers may include four types:
no session answer fed back by the destination end is received;
only the first session answer fed back by the destination end by using the connectionless-oriented transmission layer protocol is received;
only the second session answer fed back by the destination end by using the connection-oriented transmission layer protocol is received; or
the first session answer fed back by the destination end by using the connectionless-oriented transmission layer protocol and the second session answer fed back by the destination end by using the connection-oriented transmission layer protocol are received (the timing of receiving the first session answer and the timing of receiving the second session answer may be different).

Based on the four different transmission statuses, the terminal serving as the source end may determine a connectivity detection result of the connectionless-oriented signaling transmission channel and the connection-oriented signaling transmission channel of the communication session, to be specific:
both the connectionless-oriented signaling transmission channel and the connection-oriented signaling transmission channel of the communication session are in an unconnected state;
only the connectionless-oriented signaling transmission channel of the communication session is in the connected state;
only the connection-oriented signaling transmission channel of the communication session is in the connected state; or
both the connectionless-oriented signaling transmission channel and the connection-oriented signaling transmission channel of the communication session are in the connected state.

Operation 810: Transmit the session data of the communication session to the source end through the data transmission channel.

In one embodiment, the server serving as the destination end receives, first binary offer data and second binary offer data of the communication session sent by the source end based on the connectionless-oriented transmission layer protocol and the connection-oriented transmission layer protocol respectively; and compresses the first binary offer data and the second binary offer data, to obtain the first session offer and the second session offer of the communication session.

In one embodiment, for ease of transmission, the source end may further compress the original session offer, to obtain binary offer data. Therefore, the original session offer is compressed into the binary offer data within one MTU (generally 1200 bytes). Then, the binary offer data obtained through compression is sent to the destination end based on the connectionless-oriented transmission layer protocol and the connection-oriented transmission layer protocol respectively in terms of the first session offer and the second session offer. After receiving, from the source end, first binary offer data of the communication session transmitted based on the connectionless-oriented transmission layer protocol and second binary offer data of the communication session transmitted based on the connection-oriented transmission layer protocol, the destination end decompresses the first binary offer data to obtain the first session offer, and decompresses the second binary offer data to obtain the second session offer.

In one embodiment, that based on the connectionless-oriented transmission layer protocol and the connection-oriented transmission layer protocol respectively, the session answers are fed back to the source end includes: compressing the first session answer to obtain a first binary answer data; compressing the second session answer to obtain a second binary answer data; transmitting the first binary answer data to the source end based on the connectionless-oriented transmission layer protocol; and transmitting the second binary answer data to the source end based on the connection-oriented transmission layer protocol respectively.

For ease of transmission, the destination end may also compress the generated session answers, to obtain corresponding binary answer data, and then feed back the session answers by using the connectionless-oriented transmission layer protocol and the connection-oriented transmission layer protocol respectively. In this case, the source end may also need to decompress the received binary answer data, to obtain the corresponding session answers.

In one embodiment, that based on the connectionless-oriented transmission layer protocol and the connection-oriented transmission layer protocol respectively, the session answers are fed back to the source end includes: encapsulating the first session answer into a third interaction signaling based on the connectionless-oriented transmission layer protocol; encapsulating the second session answer into a fourth interaction signaling based on the connection-oriented transmission layer protocol; transmitting the third interaction signaling to the source end by using the connectionless-oriented transmission layer protocol; and transmitting the fourth interaction signaling to the source end by using the connection-oriented transmission layer protocol.

Before establishing the connection, the terminal may further perform the connection check based on the candidate address combination, to determine a final path for transmitting the session data. In the foregoing signaling interaction phase, the terminal obtains the candidate addresses respectively corresponding to the local and the destination end. The terminal may combine these candidate addresses, to obtain a plurality of candidate address combinations, and prioritize these candidate address combinations. The priority is determined based on parameters such as an address type and a media type. For example, considering factors such as a delay, a bandwidth resource, and a packet loss, a host-type candidate address generally has a higher priority. Each candidate address combination may be configured to transmit the session data of the communication session. The terminal first initiates, based on priorities of theses candidate address combinations, a connection check request to the destination end for a candidate address combination having the highest priority. If a connection check response fed back by the destination end can be received, the candidate address combination is connected, and both the source end and the destination end may use the candidate address combination to transmit the session data. Otherwise, if the connection check response fed back by the destination end cannot be received, or feedback of the connection check response times out, the source end may obtain a next candidate address combination, and initiate a connection check request for the next candidate address combination. In this way, a final path and a channel for transmitting the session data can be determined.

In one embodiment, that based on the source-end candidate address and the destination-end candidate address, a data transmission channel is established with the source end includes: receiving a connection check request initiated by the source end based on a first address in a source-end candidate address and a second address in a destination-end candidate address, wherein the destination-end candidate address refers to a first destination-end candidate address comprised in the first session answer, in response to the connectionless-oriented signaling transmission channel being in a connected state; the destination-end candidate address refers to a second destination-end candidate address comprised in the second session answer, in response to the connection-oriented signaling transmission channel being in a connected state; and in response to the first address and the second address belonging to a candidate address combination of the communication session, feeding back a connection check response to the source end, to establish a data transmission channel with the source end according to the first address and the second address.

In one specific embodiment, the data transmission method is described from a perspective of both the source end and the destination end, and specifically includes the following operations:

The source end creates the communication session in responses to a trigger operation of pulling a media stream from the server; obtains session description information of the communication session; generates an original session offer of the communication session based on the session description information; and compresses the original session offer, to obtain the binary offer data.

The source end transmits the binary offer data to the destination end based on the connectionless-oriented transmission layer protocol and the connection-oriented transmission layer protocol respectively.

If receiving the first binary offer data transmitted by using the connectionless-oriented transmission layer protocol, the destination end decompresses to obtain the first session offer transmitted by using the connectionless-oriented transmission layer protocol; obtains the first source-end candidate address of the source end from the session first offer; stores the first destination-end candidate address set by the destination end; creates the first session answer based on the destination-end candidate address; and feeds back first the session answer to the source end by using the connectionless-oriented transmission layer protocol; or

if receiving the second binary offer data transmitted by using the connection-oriented transmission layer protocol, the destination end decompresses to obtain the second session offer transmitted by using the connection-oriented transmission layer protocol; obtains the second source-end candidate address of the source end from the session offer; stores the second destination-end candidate address set by the destination end; creates the second session answer based on the destination-end candidate address; and feeds back the second session answer to the source end by using the connection-oriented transmission layer protocol.

If receiving only a first session answer fed back by the destination end by using the connectionless-oriented transmission layer protocol, the source end stores the first destination-end candidate address included in the first session answer and used to transmit the session data, and determines that the connectionless-oriented signaling transmission channel of the communication session is in a connected state; or
if receiving only a second session answer fed back by the destination end by using the connection-oriented transmission layer protocol, the source end stores the second destination-end candidate address included in the second session answer and used to transmit the session data, and determines that the connection-oriented signaling transmission channel of the communication session is in a connected state.

After receiving the session answer fed back by the destination end by using the connectionless-oriented transmission layer protocol, and storing the destination-end candidate address that is used to transmit the session data and that is in the session answer, if receiving at least one candidate address fed back by the destination end by using the connection-oriented transmission layer protocol, the source end stores the fed back candidate address, and determines that both the connectionless-oriented signaling transmission channel and the connection-oriented signaling transmission channel of the communication session are in the connected state.

If the connectionless-oriented signaling transmission channel of the communication session is in the connected state, the source end initiates, based on the candidate address combination comprising the first address in the source-end candidate address and the second address in the destination-end candidate address, the connection check request of the candidate address combination; and when receiving a connection check response fed back by the destination end in response to the connection check request, establishes the connectionless-oriented data transmission channel with the destination end based on the candidate address combination; or
if the connection-oriented signaling transmission channel of the communication session is in the connected state, the source end initiates, based on the candidate address combination comprising the first address in the source-end candidate address and the second address in the destination-end candidate address, the connection check request of the candidate address combination; and when receiving the connection check response fed back by the destination end in response to the connection check request, establishes the connection-oriented data transmission channel with the destination end based on the candidate address combination.

The session data of the communication session is transmitted between the source end and the destination end through the data transmission channel.

The data transmission method, in a signaling interaction phase of the source end and the destination end, uses the connectionless-oriented transmission layer protocol and the connection-oriented transmission layer protocol to complement each other with respective advantages and disadvantages. By using dual-channel signaling interaction of the connectionless-oriented signaling transmission channel and the connection-oriented signaling transmission channel, connectivity detection of both the connectionless-oriented signaling transmission channel and the connection-oriented signaling transmission channel is implemented when a success rate of the signaling interaction is improved. In one embodiment, when receiving the session offers of the communication session sent by the source end based on the connectionless-oriented transmission layer protocol and the connection-oriented transmission layer protocol respectively, the destination end collects the source-end candidate addresses that are used to transmit the session data and that are in the two session offers; generates the session answers in response to the session offers based on a local destination-end candidate address; and replies the source end with the session answers by using the connectionless-oriented transmission layer protocol and the connection-oriented transmission layer protocol respectively. Therefore, the source end may determine the respective connectivity detection result of the connectionless-oriented signaling transmission channel and the connection-oriented signaling transmission channel of the communication session based on the transmission statuses of the session answer; adaptively select one channel to establish the data transmission channel based on the connectivity detection result, the source-end candidate address and the destination-end candidate address; and transmit, in a data transmission phase, the session data of the communication session to the destination end based on the established data transmission channel. In the entire process, the source end does not need to try to establish the connection in another when a timeout period expires, but directly completes the connectivity detection of the two types during signaling interaction. This greatly reduces a data transmission delay, and improves service experience.

Although the operations in the flowcharts involved in embodiments are shown in sequence as indicated by the arrows, the operations are not necessarily executed in sequence indicated by the arrows. Unless explicitly descriptions in this specification, there is no strict sequence restriction on the execution of the operations, and the operations can be executed in another sequence. In addition, at least some of the operations in the flowcharts involved in embodiments may include a plurality of operations or phases. The operations or phases are not necessarily executed at the same time, but may be executed at different times. The execution sequence of the operations or phases is not necessarily in sequence, but may be executed in turn or alternately with another operation or at least part of the operation or phases in another operation.

Based on a same inventive concept, embodiments of this application further provide a data transmission apparatus for implementing the data transmission method. The implementation solution provided by the apparatus to solve the problem is similar to the implementation solution recorded in the foregoing method. Therefore, for specific limitations in one or more data transmission apparatus embodiments provided below, refer to limitations on the foregoing data transmission method.

In one embodiment, as shown in FIG. 9, a data transmission apparatus 900 is provided, including a session offer sending module 902, a connectivity detection module 904, a connection establishment module 906, and a transmission module 908.

The session offer sending module 902 is configured to: generate an original session offer of a communication session, and transmitting the original session offer to a destination end respectively based on a connectionless-oriented transmission layer protocol and a connection-oriented transmission layer protocol, to enable the destination end to feed back a first session answer based on the connectionless-oriented transmission layer protocol and a second session answer based on the connection-oriented transmission layer protocol.

The connectivity detection module 904 is configured to: determine, based on whether receiving the first session answer and the second session answer, a connectivity detection result for a connectionless-oriented signaling transmission channel and a connection-oriented signaling transmission channel.

The connection establishment module 906 is configured to: establish a data transmission channel with the destination end based on the connectivity detection result.

The transmission module 908 is configured to transmit session data of the communication session to the destination end through the data transmission channel.

In one embodiment, the session offer sending module 902 is further configured to: create the communication session in response to a trigger operation of pulling a media stream from a server; obtain session description information of the communication session; and generate the original session offer based on the session description information.

In one embodiment, the session offer sending module 902 is further configured to: compress the original session offer, to obtain binary offer data; and transmit the binary offer data to the destination end respectively based on the connectionless-oriented transmission layer protocol and the connection-oriented transmission layer protocol.

In one embodiment, the session offer sending module 902 is further configured to: encapsulate, based on the connectionless-oriented transmission layer protocol, the original session offer into a first interaction signaling as a first session offer; encapsulate, based on the connection-oriented transmission layer protocol, the original session offer into a second interaction signaling as a second session offer; transmit the first session offer to the destination end by using the connectionless-oriented transmission layer protocol; and transmit the second session offer to the destination end by using the connection-oriented transmission layer protocol.

In one embodiment, the connectivity detection module 904 is further configured to: in response to only receiving the first session answer fed back by the destination end for the first interaction signaling by using the connectionless-oriented transmission layer protocol, store a first destination-end candidate address comprised in the first session answer, the first destination-end candidate address being used to transmit the session data, and determine that the connectionless-oriented signaling transmission channel is in a connected state ; or in response to only receiving the second session answer fed back by the destination end for the second interaction signaling by using the connection-oriented transmission layer protocol, store a second destination-end candidate address comprised in the second session answer, the second destination-end candidate address being used to transmit the session data, and determine that the connection-oriented signaling transmission channel is in a connected state.

In one embodiment, the connection establishment module 906 is further configured to: in response to the connectionless-oriented signaling transmission channel being in the connected state, initiate, based on a candidate address combination comprising a first address in a first source-end candidate address and a second address in the first destination-end candidate address, a connection check request of the candidate address combination; and when receiving a connection check response fed back by the destination end in response to the connection check request, establish a connectionless-oriented data transmission channel with the destination end based on the candidate address combination.

In one embodiment, the connection establishment module 906 is further configured to: in response to the connection-oriented signaling transmission channel being in the connected state, initiate, based on a candidate address combination comprising a first address in a first source-end candidate address and a second address in the second destination-end candidate address, a connection check request of the candidate address combination; and when receiving a connection check response fed back by the destination end in response to the connection check request, establish a connection-oriented data transmission channel with the destination end based on the candidate address combination.

In one embodiment, the connectivity detection module 904 is further configured to: after receiving the first session answer and storing a first destination-end candidate address comprised in the first session answer, the first destination-end candidate address being used to transmit the session data, in response to receiving the second session answer, store a second destination-end candidate address comprised in the second session answer; and determine that both the connectionless-oriented signaling transmission channel and the connection-oriented signaling transmission channel are in a connected state.

The data transmission apparatus 900, in a signaling interaction phase of the source end and the destination end, uses the connectionless-oriented transmission layer protocol and the connection-oriented transmission layer protocol to complement each other with respective advantages and disadvantages. By using dual-channel signaling interaction of the connectionless-oriented signaling transmission channel and the connection-oriented signaling transmission channel, connectivity detection of both the connectionless-oriented signaling transmission channel and the connection-oriented signaling transmission channel is implemented when a success rate of the signaling interaction is improved.

In one embodiment, the source end generates an original session offer of the communication session; sends the original session offer to the destination end based on the connectionless-oriented transmission layer protocol and the connection-oriented transmission layer protocol, respectively; and determines, based on transmission statuses of session answers fed back by the destination end, a connectivity detection result for a connectionless-oriented signaling transmission channel and a connection-oriented signaling transmission channel. In this way, the connectionless-oriented signaling transmission channel and the connection-oriented signaling transmission channel can be adaptively selected based on the connectivity detection result directly, to seamlessly establish the connection to the destination end. Therefore, in the data transmission phase, the session data of the communication session is transmitted to the destination end based on the established data transmission channel. In the entire process, there is no need to establish the connection in another after a timeout period expires. Connectivity detection of the two types of channel is directly implemented during signaling interaction. This greatly reduces the data transmission delay, and improves the service experience.

All or a part of each module of the transmission apparatus 900 may be implemented by using software, hardware, and a combination of the software and the hardware thereof. Each module may be embedded in or independent of the processor of the computer device in a form of the hardware, or may be stored in the memory of the computer device in a form of the software, to enable the processor to execute operations corresponding to the modules.

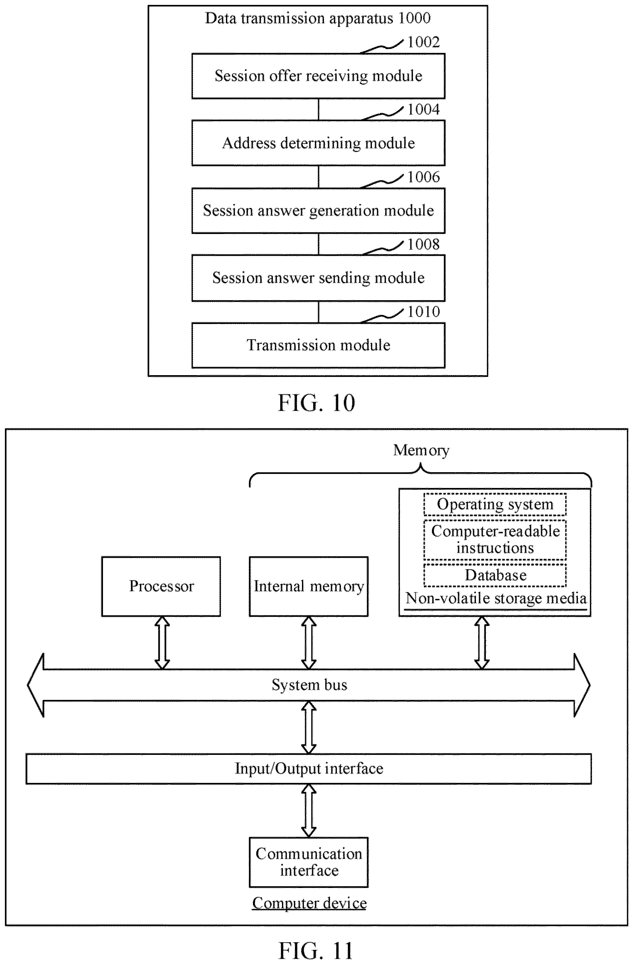

In one embodiment, as shown in FIG. 10, a data transmission apparatus 1000 is provided, including a session offer receiving module 1002, a source end address adding module 1004, a session answer generation module 1006, a session answer sending module 1008, and a transmission module 1010.

The session offer receiving module 1002 is configured to: receive, from a source end, a first session offer of a communication session transmitted based on a connectionless-oriented transmission layer protocol and a second session offer of the communication session transmitted based on a connection-oriented transmission layer protocol.

The address determining module 1004 is configured to determine a first destination-end candidate address for the first session offer and a second destination-end candidate address for the second session offer.

The session answer generation module 1006 is configured to generate a first session answer comprising the first destination-end candidate address and a second session answer comprising the second destination-end candidate address.

The session answer sending module 1008 configured to: feed back, to the source end, the first session answer based on the connectionless-oriented transmission layer protocol and the second session answer based on the connection-oriented transmission layer protocol, to enable the source end to determine, based on whether receiving the first session answer and the second session answer, a connectivity detection result for a connectionless-oriented signaling transmission channel and a connection-oriented signaling transmission channel.

The transmission module 1010 is configured to establish a data transmission channel with the source end based on the connectivity detection result, and transmit session data of the communication session to the source end through the data transmission channel.

In one embodiment, the session offer receiving module 1002 is further configured to: receive, from the source end, first binary offer data of the communication session transmitted based on the connectionless-oriented transmission layer protocol and second binary offer data of the communication session transmitted based on the connection-oriented transmission layer protocol; decompress the first binary offer data to obtain the first session offer; and decompress the second binary offer data to obtain the second session offer.

In one embodiment, the session answer sending module 1008 is further configured to: compress the first session answer to obtain a first binary answer data; compress the second session answer to obtain a second binary answer data; transmit the first binary answer data to the source end based on the connectionless-oriented transmission layer protocol; and transmit the second binary answer data to the source end based on the connection-oriented transmission layer protocol respectively.

In one embodiment, the session answer sending module 1008 is further configured to: encapsulate the first session answer into a third interaction signaling based on the connectionless-oriented transmission layer protocol; encapsulate the second session answer into a fourth interaction signaling based on the connection-oriented transmission layer protocol; transmit the third interaction signaling to the source end by using the connectionless-oriented transmission layer protocol; and transmit the fourth interaction signaling to the source end by using the connection-oriented transmission layer protocol.

In one embodiment, the apparatus further includes a connection establishment module, configured to: receive a connection check request initiated by the source end based on a first address in a source-end candidate address and a second address in a destination-end candidate address, wherein the destination-end candidate address refers to a first destination-end candidate address comprised in the first session answer, in response to the connectionless-oriented signaling transmission channel being in a connected state; the destination-end candidate address refers to a second destination-end candidate address comprised in the second session answer, in response to the connection-oriented signaling transmission channel being in a connected state; and in response to the first address and the second address belonging to a candidate address combination of the communication session, feed back a connection check response to the source end, to establish a data transmission channel with the source end according to the first address and the second address.

The data transmission apparatus 1000, in a signaling interaction phase of the source end and the destination end, uses the connectionless-oriented transmission layer protocol and the connection-oriented transmission layer protocol to complement each other with respective advantages and disadvantages. By using dual-channel signaling interaction of the connectionless-oriented signaling transmission channel and the connection-oriented signaling transmission channel, connectivity detection of both the connectionless-oriented signaling transmission channel and the connection-oriented signaling transmission channel is implemented when a success rate of the signaling interaction is improved. In one embodiment, when receiving the session offers of the communication session sent by the source end based on the connectionless-oriented transmission layer protocol and the connection-oriented transmission layer protocol respectively, the destination end collects the source-end candidate addresses that are used to transmit the session data and that are in the two session offers; generates the session answers in response to the session offers based on a local destination-end candidate address; and replies the source end with the session answers by using the connectionless-oriented transmission layer protocol and the connection-oriented transmission layer protocol respectively. Therefore, the source end may determine the respective connectivity detection result of the connectionless-oriented signaling transmission channel and the connection-oriented signaling transmission channel of the communication session based on the transmission statuses of the session answer; adaptively select one channel to establish the data transmission channel based on the connectivity detection result, the source-end candidate address and the destination-end candidate address; and transmit, in a data transmission phase, the session data of the communication session to the destination end based on the established data transmission channel. In the entire process, the source end does not need to try to establish the connection in another when a timeout period expires, but directly completes the connectivity detection of the two types during signaling interaction. This greatly reduces a data transmission delay, and improves service experience.

All or a part of each module of the transmission apparatus 1000 may be implemented by using software, hardware, and a combination of the software and the hardware thereof. Each module may be embedded in or independent of the processor of the computer device in a form of the hardware, or may be stored in the memory of the computer device in a form of the software, to enable the processor to execute operations corresponding to the modules.

In one embodiment, a computer device is provided. The computer device may be the server 104 in FIG. 1, and an internal structure may be shown in FIG. 11. The computer device includes a processor, a memory, an input/output (I/O for short) interface, and a communication interface. The processor, the memory, and the input/output interface are connected through a system bus. The communication interface is connected to the system bus through the input/output interface. The processor of the computer device is configured to provide a computing and control capability. The memory of the computer device includes a non-volatile storage media and an internal memory. The non-volatile storage media stores an operating system, computer-readable instructions, and a database. The internal memory provides an environment for execution of the operating system and the computer-readable instructions in the non-volatile storage media. The database of the computer device is configured to store session data, such as media resource data. The input/output interface of the computer device is configured to exchange information between the processor and an external device. The communication interface of the computer device is configured to connect and communicate with an external terminal through a network. When the computer-readable instructions are executed by the processor, a data transmission method is implemented.

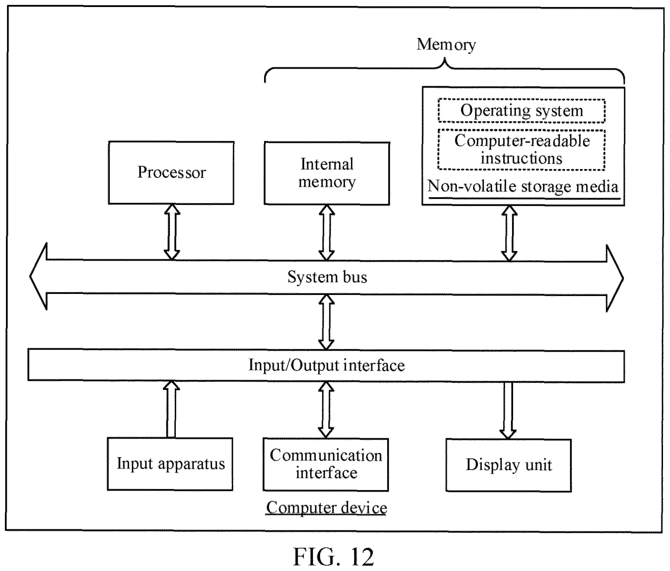

In one embodiment, a computer device is provided. The computer device may be the terminal 102 in FIG. 1, and an internal structure may be shown in FIG. 12. The computer device includes a processor, a memory, an input/output interface, a communication interface, a display unit and an input apparatus. The processor, the memory, and the input/output interface are connected through a system bus. The communication interface, the display unit and the input apparatus are connected to the system bus through the input/output interface. The processor of the computer device is configured to provide a computing and control capability. The memory of the computer device includes a non-volatile storage media and an internal memory. The non-volatile storage media stores an operating system and computer-readable instructions. The internal memory provides an environment for execution of the operating system and the computer-readable instructions in the non-volatile storage media. The input/output interface of the computer device is configured to exchange information between the processor and an external device. The communication interface of the computer device is configured to communication with an external terminal in a wired or wireless manner. The wireless may be implemented through Wi-Fi, a mobile cellular network, near field communication (NFC) or another technology. When the computer-readable instructions are executed by the processor, a data transmission method is implemented. The display unit of the computer device is configured to form a visually visible picture and may be a display screen, a projection device or a virtual reality imaging device. The display screen may be a liquid crystal display or an electronic ink display. The input device of the computer device may be a touch layer covered on the display screen, or may also be a button, a trackball or a touch pad provided on a computer device shell, or may alternatively be an external keyboard, a touch pad or a mouse.

A person skilled in the art may understand that, the structures shown in FIG. 11 and FIG. 12 are merely block diagrams of some structures related to solutions of this application, and may not constitute limitation on the computer device to which the solutions of this application is applied. A specific computer device may include more or fewer components than those shown in the figure, or some components may be combined, or a different component deployment may be used.

In one embodiment, a computer device is provided, including a memory and a processor. The memory stores computer-readable instructions. When the computer-readable instructions are executed by the processor, operations of the data transmission method described by the foregoing one or more embodiments are implemented.

In one embodiment, a computer-readable storage medium is provided, having computer-readable instructions stored therein. When the computer-readable instructions are executed by the processor, operations of the data transmission method described by the foregoing one or more embodiments are implemented.

In one embodiment, a computer program product is provided, including computer-readable instructions. When the computer-readable instructions are executed by the processor, operations of the data transmission method described by the foregoing one or more embodiments are implemented.

User information (including but not limited to user equipment information, user personal information, and the like) and data (including but not limited to data used for analysis, stored data, displayed data, and the like) involved in this application both are information and data authorized by the user or fully authorized by all parties, and the collection, use and processing of relevant data need to comply with the related laws, regulations and standards of related countries and regions.

A person of ordinary skill in the art may understand that all or some of the processes of the methods in the embodiments may be implemented by indicating related hardware through computer-readable instructions. The computer-readable instructions may be stored in a non-volatile computer-readable storage medium. When the computer-readable instructions are executed, the computer-readable instructions may include the processes of the foregoing method embodiments. Any reference to the memory, the database or another media used in embodiments provided by this application may include at least one of the non-volatile memory and the volatile memory. The non-volatile memory can include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phasechange memory (PCM), a graphene memory, and the like. The volatile memory may include a random access memory (RAM), an external cache memory, or the like. For description and not a limitation, the RAM may be in various forms, such as a static random access memory (SRAM), or a dynamic random access memory (DRAM). The databases involved in the various embodiments provided by this application may include at least one of a relational database and a non-relational database. The non-relational databases may include a blockchain-based distributed databases, and the like. This is not limited. The processors involved in embodiments provided by this application may be a general-purpose processor, a central processing unit, a graphics processor, a digital signal processor, a programmable logic device, a quantum computing-based data processing logic device, and the like. This is not limited.

Technical features of foregoing embodiments may be combined in different s to form other embodiments. For ease of description, not all possible combinations of the technical features in embodiments are described. However, as long as there is no contradiction in the combinations of these technical features, it is to be considered to be within the scope of this application.

Embodiments only describe several implementations of this application, and the description is specific and detailed, but is not to be understood as limitations of the patent scope of this application. A person of ordinary skill in the art can further make several improvements and refinements without departing from the concept of this application, and the modifications and improvements shall fall within the protection scope of this application. Therefore, the protection scope of this application shall be subject to the attached claims.

## Claims

1. A data transmission method, executable by a computer device, and the method comprising:
generating an original session offer of a communication session, and transmitting the original session offer to a destination end respectively based on a connectionless-oriented transmission layer protocol and a connection-oriented transmission layer protocol, to enable the destination end to feed back a first session answer based on the connectionless-oriented transmission layer protocol and a second session answer based on the connection-oriented transmission layer protocol;
determining, based on whether receiving the first session answer and the second session answer, a connectivity detection result for a connectionless-oriented signaling transmission channel and a connection-oriented signaling transmission channel;
establishing a data transmission channel with the destination end based on the connectivity detection result; and
transmitting session data of the communication session to the destination end through the data transmission channel.

2. The method according to claim 1, wherein the generating an original session offer of a communication session comprises:
creating the communication session in response to a trigger operation of pulling a media stream from a server;
obtaining session description information of the communication session; and
generating the original session offer based on the session description information.

3. The method according to claim 1, wherein the transmitting the original session offer to a destination end respectively based on a connectionless-oriented transmission layer protocol and a connection-oriented transmission layer protocol comprises:
compressing the original session offer, to obtain binary offer data; and
transmitting the binary offer data to the destination end respectively based on the connectionless-oriented transmission layer protocol and the connection-oriented transmission layer protocol.

4. The method according to claim 1, wherein the transmitting the original session offer to a destination end respectively based on a connectionless-oriented transmission layer protocol and a connection-oriented transmission layer protocol comprises:
encapsulating, based on the connectionless-oriented transmission layer protocol, the original session offer into a first interaction signaling as a first session offer;
encapsulating, based on the connection-oriented transmission layer protocol, the original session offer into a second interaction signaling as a second session offer;
transmitting the first session offer to the destination end by using the connectionless-oriented transmission layer protocol; and
transmitting the second session offer to the destination end by using the connection-oriented transmission layer protocol.

5. The method according to claim 4, wherein the determining, based on whether receiving the first session answer and the second session answer, a connectivity detection result for a connectionless-oriented signaling transmission channel and a connection-oriented signaling transmission channel comprises:
in response to only receiving the first session answer fed back by the destination end for the first interaction signaling by using the connectionless-oriented transmission layer protocol,
storing a first destination-end candidate address comprised in the first session answer, the first destination-end candidate address being used to transmit the session data, and
determining that the connectionless-oriented signaling transmission channel is in a connected state; or
in response to only receiving the second session answer fed back by the destination end for the second interaction signaling by using the connection-oriented transmission layer protocol,
storing a second destination-end candidate address comprised in the second session answer, the second destination-end candidate address being used to transmit the session data, and
determining that the connection-oriented signaling transmission channel is in a connected state.

6. The method according to claim 5, wherein the establishing a data transmission channel with the destination end based on the connectivity detection result comprises:
in response to the connectionless-oriented signaling transmission channel being in the connected state,
initiating, based on a candidate address combination comprising a first address in a first source-end candidate address and a second address in the first destination-end candidate address, a connection check request of the candidate address combination; and
when receiving a connection check response fed back by the destination end in response to the connection check request,
establishing a connectionless-oriented data transmission channel with the destination end based on the candidate address combination.

7. The method according to claim 5, wherein the establishing a data transmission channel with the destination end based on the connectivity detection result comprises:
in response to the connection-oriented signaling transmission channel being in the connected state,
initiating, based on a candidate address combination comprising a first address in a first source-end candidate address and a second address in the second destination-end candidate address, a connection check request of the candidate address combination; and
when receiving a connection check response fed back by the destination end in response to the connection check request,
establishing a connection-oriented data transmission channel with the destination end based on the candidate address combination.

8. The method according to claim 4, wherein the determining, based on whether receiving the first session answer and the second session answer, a connectivity detection result for a connectionless-oriented signaling transmission channel and a connection-oriented signaling transmission channel comprises:
after receiving the first session answer and storing a first destination-end candidate address comprised in the first session answer, the first destination-end candidate address being used to transmit the session data,
in response to receiving the second session answer,
storing a second destination-end candidate address comprised in the second session answer; and
determining that both the connectionless-oriented signaling transmission channel and the connection-oriented signaling transmission channel are in a connected state.

9. A data transmission method, executable by a computer device, and the method comprising:
receiving, from a source end, a first session offer of a communication session transmitted based on a connectionless-oriented transmission layer protocol and a second session offer of the communication session transmitted based on a connection-oriented transmission layer protocol;
determining a first destination-end candidate address for the first session offer and a second destination-end candidate address for the second session offer;
generating a first session answer comprising the first destination-end candidate address and a second session answer comprising the second destination-end candidate address;
feeding back, to the source end, the first session answer based on the connectionless-oriented transmission layer protocol and the second session answer based on the connection-oriented transmission layer protocol, to enable the source end to determine, based on whether receiving the first session answer and the second session answer, a connectivity detection result for a connectionless-oriented signaling transmission channel and a connection-oriented signaling transmission channel;
establishing a data transmission channel with the source end based on the connectivity detection result; and
transmitting session data of the communication session to the source end through the data transmission channel.

10. The method according to claim 9, wherein the receiving, from a source end, a first session offer of a communication session transmitted based on a connectionless-oriented transmission layer protocol and a second session offer of the communication session transmitted based on a connection-oriented transmission layer protocol comprises:
receiving, from the source end, first binary offer data of the communication session transmitted based on the connectionless-oriented transmission layer protocol and second binary offer data of the communication session transmitted based on the connection-oriented transmission layer protocol;
decompressing the first binary offer data to obtain the first session offer; and
decompressing the second binary offer data to obtain the second session offer.

11. The method according to claim 9, wherein the feeding back, to the source end, the first session answer based on the connectionless-oriented transmission layer protocol and the second session answer based on the connection-oriented transmission layer protocol comprises:
compressing the first session answer to obtain a first binary answer data;
compressing the second session answer to obtain a second binary answer data;
transmitting the first binary answer data to the source end based on the connectionless-oriented transmission layer protocol; and
transmitting the second binary answer data to the source end based on the connection-oriented transmission layer protocol respectively.

12. The method according to claim 9, wherein the feeding back, to the source end, the first session answer based on the connectionless-oriented transmission layer protocol and the second session answer based on the connection-oriented transmission layer protocol comprises:
encapsulating the first session answer into a third interaction signaling based on the connectionless-oriented transmission layer protocol;
encapsulating the second session answer into a fourth interaction signaling based on the connection-oriented transmission layer protocol;
transmitting the third interaction signaling to the source end by using the connectionless-oriented transmission layer protocol; and
transmitting the fourth interaction signaling to the source end by using the connection-oriented transmission layer protocol.

13. The method according to claim 9, wherein the establishing a data transmission channel with the source end based on the connectivity detection result comprises:
receiving a connection check request initiated by the source end based on a first address in a source-end candidate address and a second address in a destination-end candidate address, wherein
the destination-end candidate address refers to a first destination-end candidate address comprised in the first session answer, in response to the connectionless-oriented signaling transmission channel being in a connected state;
the destination-end candidate address refers to a second destination-end candidate address comprised in the second session answer, in response to the connection-oriented signaling transmission channel being in a connected state; and
in response to the first address and the second address belonging to a candidate address combination of the communication session, feeding back a connection check response to the source end, to establish a data transmission channel with the source end according to the first address and the second address.

14. A data transmission apparatus, and the apparatus comprising:
a session offer sending module, configured to: generate an original session offer of a communication session, and transmitting the original session offer to a destination end respectively based on a connectionless-oriented transmission layer protocol and a connection-oriented transmission layer protocol, to enable the destination end to feed back a first session answer based on the connectionless-oriented transmission layer protocol and a second session answer based on the connection-oriented transmission layer protocol;
a connectivity detection module, configured to: determine, based on whether receiving the first session answer and the second session answer, a connectivity detection result for a connectionless-oriented signaling transmission channel and a connection-oriented signaling transmission channel;
a connection establishment module, configured to: establish a data transmission channel with the destination end based on the connectivity detection result; and
a transmission module, configured to transmit session data of the communication session to the destination end through the data transmission channel.

15. The apparatus according to claim 14, wherein the session offer sending module is further configured to: compress the original session offer, to obtain binary offer data; and transmit the binary offer data to the destination end respectively based on the connectionless-oriented transmission layer protocol and the connection-oriented transmission layer protocol.

16. The apparatus according to claim 14, wherein the session offer sending module is further configured to: encapsulate, based on the connectionless-oriented transmission layer protocol, the original session offer into a first interaction signaling as a first session offer; encapsulate, based on the connection-oriented transmission layer protocol, the original session offer into a second interaction signaling as a second session offer; transmit the first session offer to the destination end by using the connectionless-oriented transmission layer protocol; and transmit the second session offer to the destination end by using the connection-oriented transmission layer protocol.

17. A data transmission apparatus, and the apparatus comprising:
a session offer receiving module, configured to: receive, from a source end, a first session offer of a communication session transmitted based on a connectionless-oriented transmission layer protocol and a second session offer of the communication session transmitted based on a connection-oriented transmission layer protocol;
a source end address adding module, configured to determine a first destination-end candidate address for the first session offer and a second destination-end candidate address for the second session offer;
a session answer generation module, configured to generate a first session answer comprising the first destination-end candidate address and a second session answer comprising the second destination-end candidate address;
a session answer sending module, configured to: feed back, to the source end, the first session answer based on the connectionless-oriented transmission layer protocol and the second session answer based on the connection-oriented transmission layer protocol, to enable the source end to determine, based on whether receiving the first session answer and the second session answer, a connectivity detection result for a connectionless-oriented signaling transmission channel and a connection-oriented signaling transmission channel; and
a transmission module, configured to establish a data transmission channel with the source end based on the connectivity detection result; and transmit session data of the communication session to the source end through the data transmission channel.

18. A computer device, comprising a memory and a processor, the memory storing computer-readable instructions, and when executing the computer-readable instructions, the processor implementing operations of the method according to any one of claims 1 to 13.

19. A computer-readable storage medium, having computer-readable instructions stored therein, and the computer-readable instructions, when executed by a processor, implementing operations of the method according to any one of claims 1 to 13.

20. A computer program product, comprising computer-readable instructions, and the computer-readable instructions, when executed by a processor, implementing operations of the method according to any one of claims 1 to 13.
